# EUROPEAN PATENT APPLICATION

(11) **EP 1 524 088 A2**
(43) Date of publication of application: **20.04.2005**
(21) Application number: 04024684.5
(22) Date of filing: 15.10.2004
(51) Int. Cl.: B28B 3/22

(54) **Apparatus and method for extruding mixtures provided with veins**

(30) Priority: 15.10.2003 GB 0324144
(71) Applicant: GRUPPO BARBIERI & TAROZZI S.r.l., 41043 Formigine (Modena) (IT)
(72) Inventor: Caroni, Stefano, 6965 Cadro (CH)
(74) Representative: Burrows, Anthony Gregory

(57) **Abstract**

An apparatus for extruding a mixture of materials with veins, comprising ducting 2, an extrusion mouth 4 to which the ducting 2 leads, an extruder screw 3 located in the ducting 2 and arranged to push a stream of the mixture towards the extrusion mouth 4, and a chopping device 105 in the ducting 2 and arranged to chop the stream. The chopping device 105 is arranged to disturb the stream over substantially the whole of the internal cross-section of the ducting 2 at the location of the chopping device 105 and is also arranged to act on the stream in a plane which is substantially perpendicular to a horizontal advancement direction of the stream towards the extrusion mouth 4. The chopping device 105 comprises at least one chopping blade 19 extending radially from and fixed to a shaft 14 arranged along the advancement direction. A motor 15 common to both the screw and the chopping device 105 drives both of them, the chopping device 105 being fixed coaxially and relative to the extruder screw 3 so as to be rotated therewith by the motor 15.

## Description

The present invention relates to an apparatus for, and a method of, extruding mixtures of materials provided with veins.

In various industrial fields, it is required to produce items provided in their structure with polychrome veins distributed as predetermined or completely random ornamentations.

One field in which this requirement is particularly high is in the production of tiles, especially ceramic tiles. In this specific field, it is particularly desired to produce tiles provided with polychrome veins arranged through the entire thickness of the tiles and distributed with at least some degree of randomness, so as to reproduce, as closely as possible, the appearance of natural rocks, for example marble.

One known technique for the production of such items is by extrusion, that is by preparing a mixture in a plastic state of at least two ceramic materials, differing from each other in at least e chromatic appearance, and loading the mixture into a suitable extruder, inside which the materials are mixed together, compacted, passed through suitable deflecting means, and delivered to the extrusion die. The deflecting means are expressly provided for interrupting the tendency of the extruded materials to flow in laminar streams.

An example of this technique is described in EP 1048425 in which is taught a method for forming ceramic tiles which uses an extruder formed by a mixing, first chamber, into which are introduced at least two ceramic products which are mixed by means of a first screw, by a degassing, second chamber for degassing the mixture maintained under vacuum conditions in order to eliminate air bubbles, and by an extruding, third chamber, in which the degassed mixture is delivered by a second screw towards the extrusion die, which is arranged at the end of a compacting conical portion forming an extension of the third chamber.

In the conical portion are arranged flow diverters consisting, in a first version, of one or more laminar barriers mounted transversely and oscillatable about their respective longitudinal axes by corresponding motors, to deviate the central axis of the paste stream. In a further version, the barriers are formed by two coplanar adjustable laminar-type barriers in the interior of the conical portion, in a plane perpendicular to the extruder axis, to define a cutting screen for the paste flow, or a flow passage port offset from that axis.

According to one aspect of the present invention, there is provided an apparatus for extruding a mixture of materials with veins, comprising ducting, an extrusion mouth to which said ducting leads, a pushing device located in said ducting and arranged to push a stream of said mixture towards said extrusion mouth, and a chopping device in said ducting and arranged to chop said stream.

According to a second aspect of the present invention, there is provided a method of producing an item comprised of a mixture of materials with veins, including chopping said mixture.

According to a third aspect of the present invention, there is provided an apparatus for extruding a mixture of materials with veins, comprising ducting, an extrusion mouth to which said ducting leads, a pushing device located in said ducting and arranged to push a stream of said mixture towards said extrusion mouth, and a disturbing device at a location in said ducting and arranged to move in and thereby disturb said stream over substantially the whole of the internal cross-section of said ducting at said location.

According to a fourth aspect of the present invention, there is provided a method of producing an item comprised of a mixture of materials with veins, including pushing said mixture, by means of a pushing device, along and in ducting, and moving a disturbing device in said mixture, at a location along said ducting, so as to disturb said mixture over substantially the whole of the internal cross-section of said ducting at said location.

Owing to these four aspects of the invention, it is possible to provide an item, for example a ceramic tile, with substantially completely random chromatic ornamentation.

According to a fifth aspect of the present invention, there is provided an apparatus for extruding a mixture of materials with veins, comprising ducting, an extrusion mouth to which said ducting leads, a pushing device located in said ducting and arranged to push a stream of said mixture towards said extrusion mouth, a disturbing device in said ducting and arranged to disturb said stream, and a motor common to both said pushing device and said disturbing device and arranged to drive both of them.

Owing to this aspect of the invention, it is possible to provide an apparatus which is relatively simple and inexpensive and requires relatively less maintenance.

In a preferred embodiment, the pushing device is a screw of an extruder and the disturbing device acts as a chopping device. The disturbing device is fixed coaxially to the extruder screw so as to rotate therewith, a single motor driving both the screw and the disturbing device. The disturbing device is arranged, between the screw and the extrusion mouth, on a shaft carrying the screw and driven by the motor. The disturbing device may be one or more chopping blades extending radially from and fixed to the shaft.

In order that the invention may be clearly and completely disclosed, reference will now be made, by way of example, to the accompanying drawings, in which:

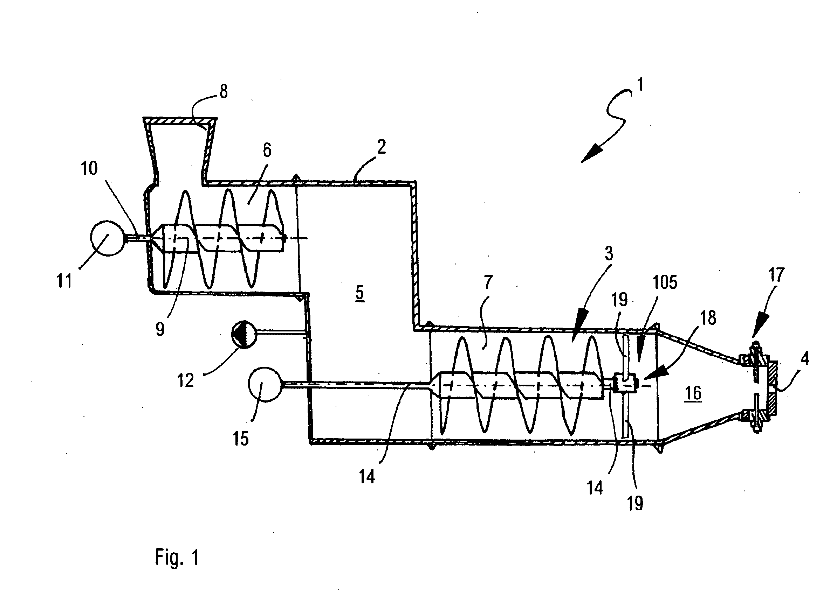

Figure 1 shows a schematic, vertical section through an apparatus for extruding mixtures of materials with veins; and

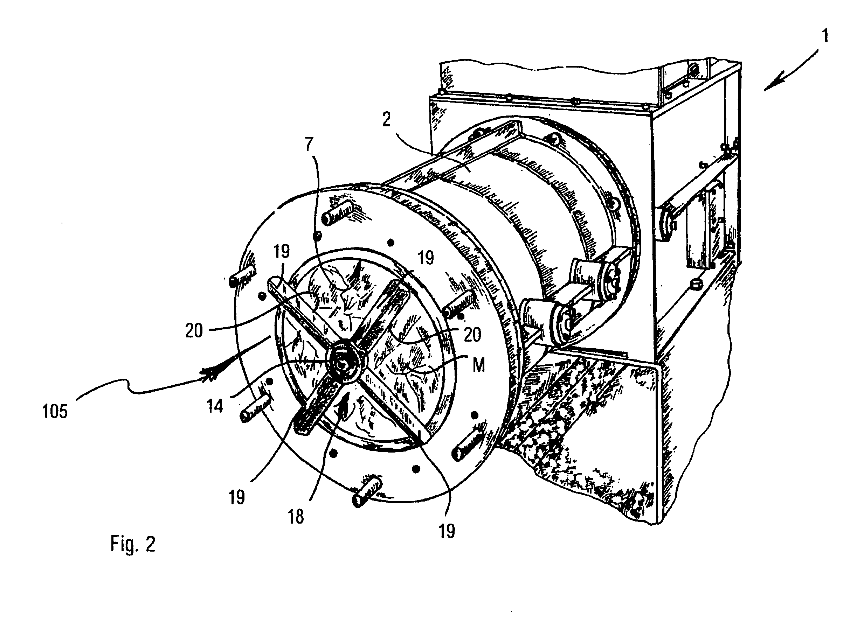

Figure 2 is a fragmentary perspective view of ducting and a chopping device of the apparatus, with parts removed for ease of understanding.

Referring to the drawings, the apparatus 1 includes ducting 2 containing an extruder screw 3, arranged to push a stream of mixture towards an extrusion die mouth 4.

The chopping device 105 is fixed to a drive shaft 14 of the screw 3, in order to chop the stream of mixture.

The ducting 2 includes a first chamber 5 suitable for degassing the mixture of materials. The first chamber 5 is maintained, for example by a pump 12, at a pressure that is substantially lower than atmospheric pressure.

The first chamber 5 is interposed between two further chambers, in particular between a second chamber 6 and a third chamber 7.

The second chamber 6 is used for mixing the mixture of materials and is provided with at least one mouth 8 through which are introduced into the second chamber 6 the materials to be mixed.

Inside the second chamber 6 is a first screw 9 which is rotatable by its own drive shaft 10 that is connected to a corresponding drive unit 11.

Downstream of the first chamber 5 is arranged the third chamber 7, used for extruding the mixture of materials. Inside the third chamber 7 is provided the screw 3 which is rotatable by a further drive shaft 14 connected to a corresponding drive unit 15.

The third chamber 7 is provided with an end portion 16, having preferably a tapered shape and suitable for compacting the mixture of materials.

The extrusion mouth 4 is provided at the narrower extremity of the end portion 16. If desired, some conventional slowing means 17 for slowing down the extrusion rate can be mounted adjacent to the mouth 4.

The chopping device 105 comprises a chopper 18 having preferably a plurality of blades 19, in the illustrated case four blades, the chopper 18 being coaxially fixed to the shaft 14, downstream of the screw 3.

Each blade 19 has a cutting, leading edge 20 to promote the penetration of the blade 19 into the mass M of the mixture of materials being extruded.

The functioning of the apparatus is as follows:

Into the second chamber 6 is introduced, through the mouth 8, a previously prepared mixture of materials chromatically different from each other, or measured quantities of single materials chromatically different from each other to form a mixture.

The mixture is formed in the second chamber 6 by means of the first screw 9 operated by its own drive unit 11.

At the exit from the first screw 9, the mixture is driven into the first chamber 5, which is maintained under vacuum conditions by the pump 12 and whereby any air bubbles present in the mixture are eliminated.

The degassed mixture is driven to the third chamber 7, in which the screw 3 delivers the mixture towards the end portion 16, where the mixture is compacted, and towards the mouth 4.

During its passage from the third chamber 7 to the end portion 16, the mixture is subjected to the chopping action of the chopper 18 which rotates together with the screw 3, as the chopper 18 is fitted to the same drive shaft 14 as rotates the screw 3.

The screw 3 causes the mixture to flow from it in a rotational-axial manner, but the blades 19 of the chopper 18 sink into the mass M of the mixture, so interrupting the natural laminar continuity determined by the movement transmitted to the mixture by the screw 3.

In this way, the blades 10 produce, in the mass M, downstream of the chopper 18, a completely random distribution of the veins produced by the agglomeration of the materials used for forming the mixtures.

Thereby, at the exit of the mouth 4, there is obtained a substantially continuous strip of extruded material provided with veins extending through the whole thickness of the strip and distributed in a completely random way.

## Claims

1. An apparatus for extruding a mixture (M) of materials with veins, comprising ducting (2), an extrusion mouth (4) to which said ducting (2) leads, a pushing device (3) located in said ducting (2) and arranged to push a stream of said mixture (M) towards said extrusion mouth (4), and a chopping device (105) in said ducting (2) and arranged to chop said stream.

2. An apparatus according to claim 1, wherein said chopping device (105) is arranged to disturb said stream over substantially the whole of the internal cross-section of said ducting (2) at the location of said chopping device (105).

3. An apparatus according to claim 1 or 2, wherein said chopping device (105) is arranged to act on said stream in a plane which is substantially perpendicular to an advancement direction of said stream towards said extrusion mouth (4).

4. An apparatus according to claim 3, wherein said advancement direction is substantially horizontal and said plane is substantially vertical.

5. An apparatus according to claim 3 or 4, wherein said chopping device (105) comprises at least one chopping blade (19) extending radially from and fixed to a shaft (14) arranged along said advancement direction.

6. An apparatus according to any preceding claim, and further comprising a motor (15) common to both said pushing device (3) and said chopping device (105) and arranged to drive both of them.

7. An apparatus according to claim 6, wherein said pushing device comprises a screw (3) of an extruder and said chopping device (105) is fixed coaxially and relative to the extruder screw (3) so as to be rotated therewith by said motor (15).

8. An apparatus according to claim 7 as appended to claim 6 as appended to claim 5, wherein said motor (15) is arranged to drive said shaft (14) which carries said extruder screw.

9. An apparatus according to any preceding claim, wherein said chopping device (105) is arranged between said pushing device (3) and said extrusion mouth (4).

10. A method of producing an item comprised of a mixture (M) of materials with veins, including chopping said mixture (M).

11. A method according to claim 10, wherein said chopping occurs while said mixture (M) is pushed in an advancement direction along and in ducting (2).

12. A method according to claim 11, wherein said chopping is performed so as to disturb said mixture (M) over substantially the whole of the internal cross-section of said ducting (2) at a location along said ducting (2).

13. A method according to claim 11 or 12, wherein said chopping comprises acting on said mixture (M) in a plane substantially perpendicular to said advancement direction.

14. A method according to any one of claims 10 to 13, and further comprising, after said chopping, extruding said mixture (M) so as to obtain a substantially continuous strip of extruded material.

15. A method according to any one of claims 10 to 14, wherein said item is a ceramic tile.

16. An apparatus for extruding a mixture (M) of materials with veins, comprising ducting (2), an extrusion mouth (4) to which said ducting (2) leads, a pushing device (3) located in said ducting (2) and arranged to push a stream of said mixture (M) towards said extrusion mouth (4), and a disturbing device (105) at a location in said ducting (2) and arranged to move in and thereby disturb said stream over substantially the whole of the internal cross-section of said ducting (2) at said location.

17. An apparatus according to claim 16, wherein said disturbing device (105) is arranged to act on said stream in a plane which is substantially perpendicular to an advancement direction of said stream towards said extrusion mouth (4).

18. An apparatus according to claim 17, wherein said advancement direction is substantially horizontal and said plane is substantially vertical.

19. An apparatus according to any one of claims 16 to 18, and further comprising a motor (15) common to both said pushing device (3) and said disturbing device (105) and arranged to drive both of them.

20. An apparatus according to claim 19, wherein said pushing device comprises a screw (3) of an extruder and said disturbing device (105) is fixed coaxially and relative to the extruder screw (3) so as to be rotated therewith by said motor (15).

21. An apparatus according to claim 20, wherein said disturbing device (105) is arranged on a shaft (14) carrying said extruder screw (3) and driven by said motor (15).

22. An apparatus according to any one of claims 16 to 21, wherein said disturbing device (105) is arranged between said pushing device (3) and said extrusion mouth (4).

23. A method of producing an item comprised of a mixture (M) of materials with veins, including pushing said mixture, by means of a pushing device (3), along and in ducting (2), and moving a disturbing device (105) in said mixture (M), at a location along said ducting (2), so as to disturb said mixture (M) over substantially the whole of the internal cross-section of said ducting (2) at said location.

24. A method according to claim 23, wherein said disturbing device (105) is moved in a plane substantially perpendicular to an advancement direction of said mixture (M) in said ducting (2).

25. A method according to claim 23 or 24, and further comprising, after said disturbing, extruding said mixture (M) so as to obtain a substantially continuous strip of extruded material.

26. A method according to any one of claims 23 to 25, wherein said item is a ceramic tile.

27. An apparatus for extruding a mixture (M) of materials with veins, comprising ducting (2), an extrusion mouth (4) to which said ducting (2) leads, a pushing device (3) located in said ducting (2) and arranged to push a stream of said mixture (M) towards said extrusion mouth (4), a disturbing device (105) in said ducting (2) and arranged to disturb said stream, and a motor (15) common to both said pushing device (3) and said disturbing device (105) and arranged to drive both of them.

28. An apparatus according to claim 27, wherein said pushing device is a screw (3) of an extruder and said disturbing device (105) is fixed coaxially and relative to the extruder screw (3) so as to rotate therewith.
